# EUROPEAN PATENT APPLICATION

(11) **EP 4 782 668 A1**
(43) Date of publication of application: **29.07.2026**
(21) Application number: 24866818.8
(22) Date of filing: 03.04.2024
(51) Int. Cl.: F01P 11/06, F04D 27/00, F04D 29/70

(54) **CONTROL METHOD AND DEVICE FOR FAN, VEHICLE CONTROLLER, AND VEHICLE**

(30) Priority: 20.09.2023 CN 202311226024
(71) Applicant: BYD Company Limited, Shenzhen, Guangdong 518118 (CN)
(72) Inventor: WEN, Xiaoquan, Shenzhen, Guangdong 518118 (CN); XIANG, Fuhua, Shenzhen, Guangdong 518118 (CN); ZHOU, Kai, Shenzhen, Guangdong 518118 (CN); HUANG, Qiang, Shenzhen, Guangdong 518118 (CN); WANG, Kuncheng, Shenzhen, Guangdong 518118 (CN)
(74) Representative: Taor, Simon Edward William
(86) International application number: PCT/CN2024/085998
(87) International publication number: WO 2025/060392

(57) **Abstract**

A fan control method and apparatus, a vehicle controller, and a vehicle are provided. In the method, a controller may control a fan to operate in a variable state for self-cleaning. This avoids affecting normal operation of the fan or even causing failure of the fan due to contamination.

## Description

### TECHNICAL FIELD

This application relates to the field of vehicles, and in particular, to a fan control method and apparatus, a vehicle controller, and a vehicle.

### BACKGROUND

With the continuous development of technologies, an electronic fan may be disposed in a vehicle. In a traveling process of the vehicle, if a temperature in a vehicle cabin is relatively high, a controller may control the electronic fan to operate, to dissipate heat from the vehicle cabin.

### SUMMARY

This application provides a fan control method and apparatus, a vehicle controller, and a vehicle. In the method, a controller may control a fan to operate in a variable state for self-cleaning. This avoids affecting normal operation of the fan or even causing failure of the fan due to contamination.

According to an aspect, a fan control method is provided, where the method includes:
controlling a fan to operate in a variable state for self-cleaning.

According to another aspect, a computer-readable storage medium is provided, where the computer-readable storage medium stores a control program for a fan, and when the control program is executed by a processor, the fan control method according to the foregoing aspect is implemented.

According to still another aspect, a vehicle controller is provided, where the vehicle controller includes a memory, a processor, and a control program for a fan that is stored in the memory and that is run on the processor, and when the control program is executed by the processor, the fan control method according to the foregoing aspect is implemented.

According to yet another aspect, a fan control apparatus is provided, where the apparatus includes:
a control module, configured to control a fan to operate in a variable state for self-cleaning.

According to still yet another aspect, a vehicle is provided, where the vehicle includes the vehicle controller according to the foregoing aspect or the fan control apparatus according to the foregoing aspect.

Additional aspects and advantages of the present invention are set forth in part in the following description, and in part become apparent from the following description, or may be learned through the practice of the present invention.

### BRIEF DESCRIPTION OF DRAWINGS

FIG. 1 is a flowchart of a fan control method according to an embodiment of the present invention;
FIG. 2 is a flowchart of another fan control method according to an embodiment of the present invention;
FIG. 3 is a diagram of a structure of a controller according to an embodiment of the present invention;
FIG. 4 is a block diagram of a fan control apparatus according to an embodiment of the present invention;
FIG. 5 is a block diagram of another fan control apparatus according to an embodiment of the present invention;
FIG. 6 is a block diagram of an identifying module according to an embodiment of the present invention; and
FIG. 7 is a block diagram of another identifying module according to an embodiment of the present invention.

### DESCRIPTION OF EMBODIMENTS

The following describes embodiments of the present invention in detail. Examples of embodiments are shown in the accompanying drawings. Same or similar reference numerals represent same or similar elements or elements with same or similar functions throughout. Embodiments described below with reference to the accompanying drawings are exemplary and are merely used to explain the present invention, and shall not be construed as a limitation on the present invention.

A fan is disposed in a front compartment of a vehicle and has a heat dissipation function. When the vehicle travels in harsh environments such as desert, mud, or sand and dust weather, the fan is prone to contamination. For example, when sand, dirt, or gravel enters the fan, the fan is contaminated. This affects normal operation of the fan or even causes failure of the fan.

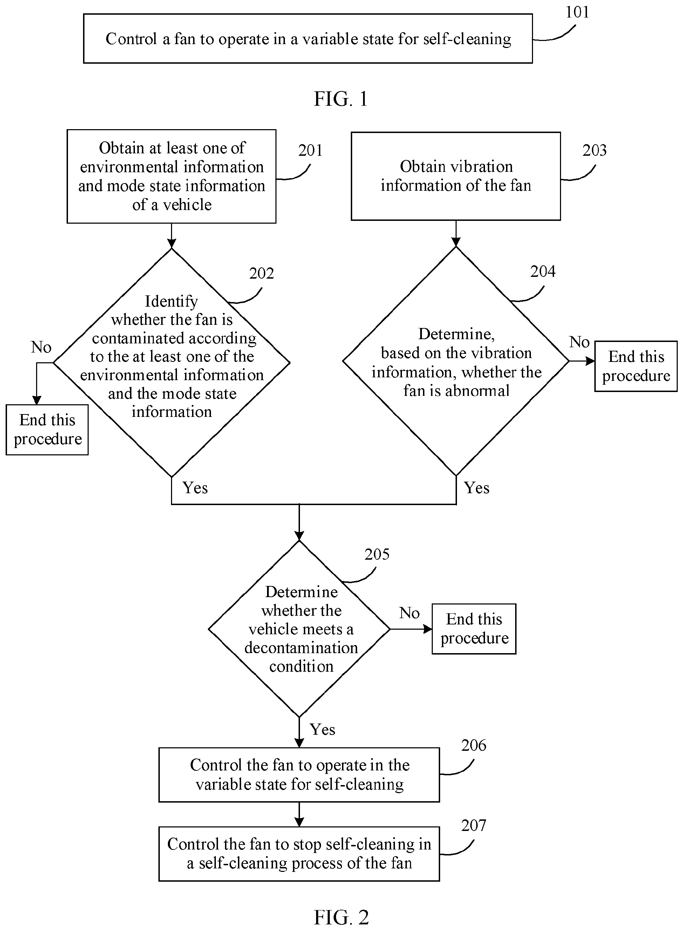

An embodiment of the present invention provides a fan control method. As shown in FIG. 1, the method includes:
Step 101: Control a fan to operate in a variable state for self-cleaning.

A controller may control the fan to operate in the variable state for self-cleaning.

In conclusion, in the fan control method provided in this embodiment of the present invention, the controller in the method may control the fan to operate in the variable state for self-cleaning. This avoids affecting normal operation of the fan or even causing failure of the fan due to contamination.

FIG. 2 is a flowchart of another fan control method according to an embodiment of the present invention. As shown in FIG. 2, the method may include:
Step 201: Obtain at least one of environmental information and mode state information of a vehicle.

A controller may obtain at least one of the environmental information and the mode state information of the vehicle. The environmental information may include at least one of location information of the vehicle and weather information. The location information may be current location information, and the weather information may be current weather information. The location information may be a longitude and latitude, and the weather information may be a parameter used to reflect weather in an environment in which the vehicle is currently located. For example, the weather information may include parameters such as a temperature, visibility, and wind power. The mode state information may be a parameter used to indicate a current operation mode of the vehicle. For example, when the mode state information is 0, it indicates that the current operation mode of the vehicle is a sand mode.

A positioning system may be disposed in the vehicle, and the controller may obtain the location information of the vehicle by using the positioning system. In addition, the controller may send the location information of the vehicle to a weather platform, enabling the weather platform to return, to the controller, weather information corresponding to the location information.

Step 202: Identify whether the fan is contaminated according to the at least one of the environmental information and the mode state information.

After obtaining the at least one of the environmental information and the mode state information of the vehicle, the controller may identify whether the fan is contaminated according to the at least one of the environmental information and the mode state information. When identifying that the fan is contaminated according to the at least one of the environmental information and the mode state information, the controller may determine that the fan needs to be cleaned, and perform step 205. When identifying that the fan is not contaminated according to the at least one of the environmental information and the mode state information, the controller may determine that the fan does not need to be cleaned, and end this procedure.

If the environmental information includes the location information, the controller may determine, based on the location information, a zone in which the vehicle is located. When determining, based on the location information, that the vehicle is located in a target area, the controller may determine that the fan is contaminated. When determining that the vehicle is not located in a target area according to the location information, the controller may determine that the fan is not contaminated.

The target area represents an environment in which the fan is prone to contamination. Optionally, the target area may include a desert zone or a muddy road zone.

It may be understood that, in a process in which the vehicle travels in the target area, sand, dust, or dirt may adhere to positions such as a motor, a hub, and a blade of the fan, and consequently, the fan is contaminated. This affects normal operation of the fan, causes deterioration of dynamic balance of the fan or even causes failure of the fan.

If the environmental information includes the weather information, the controller may determine that whether the weather in the environment in which the vehicle is currently located is target weather according to the weather information. When determining, based on the weather information, that the weather in the environment in which the vehicle is currently located is the target weather, the controller may determine that the fan is contaminated. When determining, based on the weather information, that the weather in the environment in which the vehicle is currently located is not the target weather, the controller may determine that the fan is not contaminated.

The target weather is weather in which the fan is prone to contamination, and the target weather may include sand and dust weather.

It may be understood that, when the weather in the environment in which the vehicle is currently located is the target weather, sand, dust, or dirt may adhere to the positions such as the motor, the hub, and the blade of the fan, and consequently, the fan is contaminated. This affects normal operation of the fan, causes deterioration of dynamic balance of the fan or even causes failure of the fan.

When determining, based on the mode state information, that the vehicle travels in a target mode, the controller may determine that the fan is contaminated. When determining, based on the mode state information, that the vehicle does not travel in a target mode, the controller may determine that the fan is not contaminated.

The target mode is an operation mode in which the fan is prone to contamination. The target mode may include a sand mode or a mud mode. The sand mode may also be referred to as a desert mode or a gravel mode.

It may be understood that, when the vehicle travels on sand or mud, the vehicle travels in the target mode. When the vehicle travels in the target mode, sand, dust, or dirt may adhere to the positions such as the motor, the hub, and the blade of the fan, and consequently, the fan is contaminated. This affects normal operation of the fan, causes deterioration of dynamic balance of the fan or even causes failure of the fan.

Step 203: Obtain vibration information of the fan.

In this embodiment of the present invention, the controller may obtain the vibration information of the fan. The vibration information includes a vibration frequency of the fan.

Optionally, a fan vibration monitoring assembly may be disposed in the vehicle. The fan vibration monitoring assembly is configured to: when the vehicle is in a traveling state or a parking state, monitor the vibration information of the fan in real time, and send the monitored vibration information to the controller. In this way, the controller may obtain the vibration information of the fan.

Step 204: Determine, based on the vibration information, whether the fan is abnormal.

After obtaining the vibration information of the fan, the controller may determine, based on the vibration information, whether the fan is abnormal. When determining, based on the vibration information, that the fan is abnormal, the controller may identify that the fan is contaminated, and perform step 205. When determining, based on the vibration information, that the fan is not abnormal, the controller may identify that the fan is not contaminated, and end this procedure.

When determining, based on the vibration information, that the vibration frequency of the fan exceeds a preset fan vibration threshold, the controller may determine that the fan is abnormal. When determining, based on the vibration information, that the vibration frequency of the fan does not exceed a preset fan vibration threshold, the controller may determine that the fan is not abnormal.

The fan vibration threshold may be stored in the controller, and the fan vibration threshold may be a fan vibration threshold used when the fan is in a routine cooling condition.

It may be understood that, when sand, dust, or dirt adheres to the positions such as the motor, the hub, and the blade of the fan, the vibration frequency of the fan may exceed the preset fan vibration threshold. This may cause deterioration of dynamic balance or even cause failure of the fan.

In an optional implementation of this embodiment of the present invention, when determining, based on the vibration information, that the fan is abnormal, the controller may determine that the fan is contaminated, and send fan self-cleaning prompt information, to prompt a user to check the fan in a timely manner and determine whether to control the fan to perform self-cleaning.

The fan self-cleaning prompt information may be text information, voice information, or the like. If the fan self-cleaning prompt information is the text information, the controller may send the fan self-cleaning prompt information via a pop-up window.

Optionally, if the method is applied to the vehicle, the controller may control the vehicle to send the fan self-cleaning prompt information.

In another optional implementation of this embodiment of the present invention, when determining, based on the vibration information, that the fan is abnormal, the controller may directly perform step 205.

In this embodiment of the present invention, the controller may identify, by performing step 201 and step 202, whether the fan is contaminated, and perform step 205 when identifying that the fan is contaminated. Alternatively, the controller may identify, by performing step 203 and step 204, whether the fan is contaminated, and perform step 205 when identifying that the fan is contaminated.

Step 205: Determine whether the vehicle meets a decontamination condition.

When identifying that the fan is contaminated, the controller may determine whether the vehicle meets the decontamination condition. If determining that the vehicle meets the decontamination condition, the controller performs step 206. If determining that the vehicle does not meet the decontamination condition, the controller ends this procedure.

In an optional implementation, when detecting that the vehicle is in a target state, the controller may determine that the vehicle meets the decontamination condition. When detecting that the vehicle is not in a target state, the controller may determine that the vehicle does not meet the decontamination condition. The target state may include an OFF-gear state, a vehicle low-voltage power state, or a vehicle power-off state.

For example, when a pure electric vehicle or a hybrid electric vehicle is in a high-voltage state while traveling, the fan may operate. In this case, self-cleaning is inconveniently performed on the fan. When a fuel vehicle is in an OFF-gear state, that is, the fuel vehicle is in a parking state, self-cleaning may be performed on the fan.

In another optional implementation, when detecting that the vehicle is in the target state and the vehicle is in a preset safety zone, the controller may determine that the vehicle meets the decontamination condition. When detecting that the vehicle is not in the target state and/or the vehicle is not in a preset safety zone, the controller may determine that the vehicle does not meet the decontamination condition.

A location of the safety zone may be pre-stored in the controller. The controller may determine, based on the location information of the vehicle, whether the vehicle is in the safety zone. The target state may include the OFF-gear state, the vehicle low-voltage power state, or the vehicle power-off state.

In still another optional implementation, when detecting that the vehicle is in the target state, the vehicle is in the preset safety zone, and the vehicle is in a level state, the controller may determine that the vehicle meets the decontamination condition. When detecting a target condition, the controller may determine that the vehicle does not meet the decontamination condition. The target condition may include at least one of the following: The vehicle is not in the target state, the vehicle is not in the preset safety zone, and the vehicle is not in the level state. The target state may include the OFF-gear state, the vehicle low-voltage power state, or the vehicle power-off state.

It should be noted that a manner of determining that the vehicle meets the decontamination condition is not limited to the foregoing implementation. For example, when the fan does not operate, the controller may alternatively determine that the vehicle meets the decontamination condition.

Step 206: Control the fan to operate in the variable state for self-cleaning.

When the controller identifies that the fan is contaminated, if the controller determines that the vehicle meets the decontamination condition, the controller may control the fan to operate in the variable state for self-cleaning. In this way, the fan enters a decontamination mode.

In an optional implementation of this embodiment of the present invention, after the controller identifies, by performing step 201 and step 202, that the fan is contaminated, if the controller determines that the vehicle meets the decontamination condition, the controller may control the fan to operate in the variable state for self-cleaning.

Optionally, the controller may execute a post-cooling program, and control the fan to operate in the variable state after the post-cooling program is completed.

In another optional implementation of this embodiment of the present invention, after the controller identifies, by performing step 203 to step 204, that the fan is contaminated, sends the fan self-cleaning prompt information, and generates a user cleaning instruction based on the fan self-cleaning prompt information, if the controller determines that the vehicle meets the decontamination condition, in response to the user cleaning instruction, the controller may control the fan to operate in the variable state for self-cleaning.

The user cleaning instruction is generated based on the fan self-cleaning prompt information. After receiving a confirmation operation for the fan self-cleaning prompt information, the controller may determine that the user cleaning instruction is received.

In still another optional implementation of this embodiment of the present invention, when the controller identifies, by performing step 203 to step 204, that the fan is contaminated, if the controller determines that the vehicle meets the decontamination condition, the controller may control the fan to operate in the variable state for self-cleaning.

In this embodiment of the present invention, the controller may control the fan to operate in a target operation mode, to control the fan to operate in the variable state. The target operation mode may include at least one of an intermittent operation mode, a variable-speed operation mode, and a variable-direction operation mode.

When the target operation mode includes the intermittent operation mode, the controller may control the fan to operate forward at a target rotational speed for a first preset time, control the fan to stop for a second preset time, and repeatedly perform the foregoing sequence at least once.

Alternatively, the controller may control the fan to operate in reverse at a target rotational speed for a first preset time, control the fan to stop for a second preset time, and repeatedly perform the foregoing sequence at least once, where the first preset time and the second preset time may be pre-stored in the controller.

When the target operation mode includes the intermittent operation mode and the variable-direction operation mode, the controller may control the fan to operate forward at a target rotational speed for a first preset time, control the fan to stop for a second preset time, control the fan to operate in reverse at the target rotational speed for a third preset time, control the fan to stop for a fourth preset time, and repeatedly performing the foregoing sequence at least once, where the third preset time and the fourth preset time may be pre-stored in the controller.

Alternatively, the controller may control the fan to operate in reverse at a target rotational speed for a first preset time, control the fan to stop for a second preset time, control the fan to operate forward at the target rotational speed for a third preset time, control the fan to stop for a fourth preset time, and repeatedly perform the foregoing sequence at least once.

When the target operation mode includes the intermittent operation mode and the variable-speed operation mode, the controller may control the fan to operate forward at a first rotational speed for a first preset time, control the fan to stop for a second preset time, control the fan to operate forward at a second rotational speed for a third preset time, control the fan to stop for a fourth preset time, and repeatedly perform the foregoing sequence at least once, where the first rotational speed is different from the second rotational speed, and the first rotational speed and the second rotational speed may be pre-stored in the controller.

Alternatively, the controller may control the fan to operate in reverse at a first rotational speed for a first preset time, control the fan to stop for a second preset time, control the fan to operate in reverse at a second rotational speed for a third preset time, control the fan to stop for a fourth preset time, and repeatedly perform the foregoing sequence at least once, where the first rotational speed is different from the second rotational speed.

Alternatively, the controller may control the fan to operate forward at a first variable rotational speed for a first preset time, control the fan to stop for a second preset time, control the fan to operate forward at a second variable rotational speed for a third preset time, control the fan to stop for a fourth preset time, and repeatedly perform the foregoing sequence at least once.

Alternatively, the controller may control the fan to operate in reverse at a first variable rotational speed for a first preset time, control the fan to stop for a second preset time, control the fan to operate in reverse at a second variable rotational speed for a third preset time, control the fan to stop for a fourth preset time, and repeatedly perform the foregoing sequence at least once.

When the target operation mode includes the intermittent operation mode, the variable-speed operation mode, and the variable-direction operation mode, the controller may control the fan to operate forward at a first rotational speed for a first preset time, control the fan to stop for a second preset time, control the fan to operate in reverse at a second rotational speed for a third preset time, control the fan to stop for a fourth preset time, and repeatedly perform the foregoing sequence at least once, where the first rotational speed is different from the second rotational speed.

Alternatively, the controller may control the fan to operate in reverse at a first rotational speed for a first preset time, control the fan to stop for a second preset time, control the fan to operate forward at a second rotational speed for a third preset time, control the fan to stop for a fourth preset time, and repeatedly perform the foregoing sequence at least once, where the first rotational speed is different from the second rotational speed.

Alternatively, the controller may control the fan to operate forward at a first variable rotational speed for a first preset time, control the fan to stop for a second preset time, control the fan to operate in reverse at a second variable rotational speed for a third preset time, control the fan to stop for a fourth preset time, and repeatedly perform the foregoing sequence at least once.

Alternatively, the controller may control the fan to operate in reverse at a first variable rotational speed for a first preset time, control the fan to stop for a second preset time, control the fan to operate forward at a second variable rotational speed for a third preset time, control the fan to stop for a fourth preset time, and repeatedly perform the foregoing sequence at least once.

When the target operation mode includes the variable-speed operation mode and the variable-direction operation mode, the controller may control the fan to operate forward at a first rotational speed for a first preset time, control the fan to operate in reverse at a second rotational speed for a third preset time, and repeatedly perform the foregoing sequence at least once, where the first rotational speed is different from the second rotational speed.

Alternatively, the controller may control the fan to operate in reverse at a first rotational speed for a first preset time, control the fan to operate forward at a second rotational speed for a third preset time, and repeatedly perform the foregoing sequence at least once, where the first rotational speed is different from the second rotational speed.

Alternatively, the controller may control the fan to operate forward at a first variable rotational speed for a first preset time, control the fan to operate in reverse at a second variable rotational speed for a third preset time, and repeatedly perform the foregoing sequence at least once.

Alternatively, the controller may control the fan to operate in reverse at a first variable rotational speed for a first preset time, control the fan to operate forward at a second variable rotational speed for a third preset time, and repeatedly perform the foregoing sequence at least once.

When the target operation mode includes the variable-speed operation mode, the controller may control the fan to operate forward at a first rotational speed for a first preset time, control the fan to operate forward at a second rotational speed for a third preset time, and repeatedly perform the foregoing sequence at least once, where the first rotational speed is different from the second rotational speed.

Alternatively, the controller may control the fan to operate in reverse at a first rotational speed for a first preset time, control the fan to operate in reverse at a second rotational speed for a third preset time, and repeatedly perform the foregoing sequence at least once, where the first rotational speed is different from the second rotational speed.

Alternatively, the controller may control the fan to operate forward at a first variable rotational speed for a first preset time, control the fan to operate forward at a second variable rotational speed for a third preset time, and repeatedly perform the foregoing sequence at least once.

Alternatively, the controller may control the fan to operate in reverse at a first variable rotational speed for a first preset time, control the fan to operate in reverse at a second variable rotational speed for a third preset time, and repeatedly perform the foregoing sequence at least once.

When the target operation mode includes the variable-direction operation mode, the controller may control the fan to operate forward at a target rotational speed for a first preset time, control the fan to operate in reverse at the target rotational speed for a second preset time, and repeatedly perform the foregoing sequence at least once.

Alternatively, the controller may control the fan to operate in reverse at a target rotational speed for a first preset time, control the fan to operate forward at the target rotational speed for a second preset time, and repeatedly perform the foregoing sequence at least once.

Step 207: Control the fan to stop self-cleaning in a self-cleaning process of the fan.

In the self-cleaning process of the fan, the controller may control the fan to stop self-cleaning, enabling the fan to exit the decontamination mode.

In an optional implementation, in the self-cleaning process of the fan, in response to a user instruction, the controller may control the fan to stop self-cleaning. The user instruction includes a re-power-on instruction or a self-cleaning termination instruction.

Optionally, a self-cleaning termination button may be disposed in the vehicle. After receiving a selection operation performed by the user on the self-cleaning termination button, the vehicle may generate a self-cleaning termination instruction.

In another optional implementation, in the self-cleaning process of the fan, the controller may obtain the vibration information of the fan. When determining, based on the vibration information, that a vibration frequency of the fan is greater than a preset abnormal frequency threshold, the controller may control the fan to stop self-cleaning. When determining, based on the vibration information, that a vibration frequency of the fan is less than or equal to a preset abnormal frequency threshold, the controller may control the fan to remain in a self-cleaning state. The abnormal frequency threshold may be pre-stored in the controller.

When the controller determines, based on the vibration information, that the vibration frequency of the fan is greater than the preset abnormal frequency threshold, the user needs to stop and power off the vehicle when ensuring vehicle safety and personal safety, check the fan, and check whether the fan is abnormal due to other factors.

In this embodiment of the present invention, when the controller identifies that the cooling fan is contaminated, if the controller determines that the vehicle meets the decontamination condition, the controller may control the cooling fan to operate for self-cleaning. This avoids affecting normal operation of the cooling fan, causing deterioration of dynamic balance of the cooling fan or even causing failure of the cooling fan due to contamination.

In conclusion, in the fan control method provided in this embodiment of the present invention, the controller in the method may control the fan to operate in the variable state for self-cleaning. This avoids affecting normal operation of the fan or even causing failure of the fan due to contamination.

It should be noted that, in a process of implementing the fan control method, step 205 may be deleted. That is, when identifying that the fan is contaminated, the controller may control the fan to operate in the variable state for self-cleaning.

In addition, the fan control method provided in this embodiment of the present invention may be applied to the vehicle, or may be applied to another target device with a fan. For example, the target device may be a computer device, a medical device, a purifier, or the like.

When the fan control method is applied to the target device, a controller may identify, by performing step 203 and step 204, whether the fan is contaminated.

An embodiment of the present invention provides a computer-readable storage medium. The computer-readable storage medium stores a control program for a fan. When the control program is executed by a processor, the fan control method according to the foregoing embodiment is implemented, for example, the fan control method shown in FIG. 1 or FIG. 2.

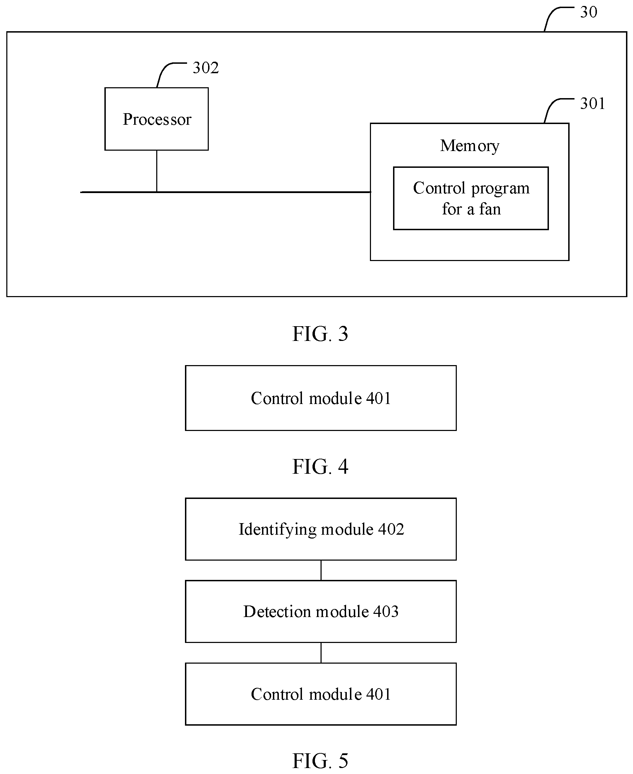

FIG. 3 is a diagram of a structure of a vehicle controller according to an embodiment of the present invention. As shown in FIG. 3, a vehicle controller 30 may include a memory 301, a processor 302, and a control program for a fan that is stored in the memory 301 and that is run on the processor 302. When the processor 302 executes the control program, the fan control method in the foregoing embodiment is implemented, for example, the fan control method shown in FIG. 1 or FIG. 2.

FIG. 4 is a block diagram of a fan control apparatus according to an embodiment of the present invention. As shown in FIG. 4, the apparatus includes:
a control module 401, configured to control a fan to operate in a variable state for self-cleaning.

Refer to FIG. 5. Optionally, the apparatus further includes:
an identifying module 402, configured to identify whether the fan is contaminated; and
the control module 401, configured to: when identifying that the fan is contaminated, control the fan to operate in the variable state.

Refer to FIG. 5. Optionally, the apparatus is applied to a vehicle. The apparatus further includes: a detection module 403, configured to:
detect whether the vehicle meets a decontamination condition; and
the control module 401, configured to: if the vehicle meets the decontamination condition, control the fan to operate in the variable state.

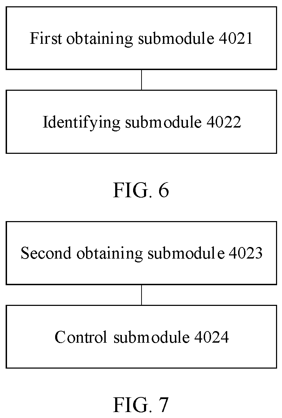

Optionally, the apparatus is applied to the vehicle. Refer to FIG. 6. The identifying module 402 includes:
a first obtaining submodule 4021, configured to obtain at least one of environmental information and mode state information of the vehicle; and
an identifying submodule 4022, configured to identify whether the fan is contaminated according to the at least one of the environmental information and the mode state information.

Optionally, the environmental information includes at least one of location information of the vehicle and weather information.

Optionally, the identifying submodule 4022 is configured to:
when determining that the vehicle is in a target area according to the location information, determine that the fan is contaminated, where the target area represents an environment in which the fan is prone to contamination.

Optionally, the target area includes a desert zone or a muddy road zone.

Optionally, the identifying submodule 4022 is configured to:
when determining that weather in an environment in which the vehicle is currently located is target weather according to the weather information, determine that the fan is contaminated, where the target weather is weather in which the fan is prone to contamination.

Optionally, the target weather includes sand and dust weather.

Optionally, the identifying submodule 4022 is configured to:
when determining, based on the mode state information, that the vehicle operates in a target mode, determine that the fan is contaminated, where the target mode is an operation mode in which the fan is prone to contamination.

Optionally, the target mode includes a sand mode or a mud mode.

Optionally, the detection module 403 is configured to:
when the vehicle is in a target state, determine that the vehicle meets the decontamination condition, where the target state includes an OFF-gear state, a vehicle low-voltage power state, or a vehicle power-off state.

Optionally, the detection module 403 is configured to:
when the vehicle is in the target state and the vehicle is in a preset safety zone, determine that the vehicle meets the decontamination condition, where the target state includes the OFF-gear state, the vehicle low-voltage power state, or the vehicle power-off state.

Optionally, the control module 401 is configured to:
when the vehicle is in the target state, the vehicle is in the preset safety zone, and the vehicle is in a level state, determine that the vehicle meets the decontamination condition, where the target state includes the OFF-gear state, the vehicle low-voltage power state, or the vehicle power-off state.

Optionally, the control module 401 is configured to:
control the fan to operate in a target operation mode, where
the target operation mode includes at least one of an intermittent operation mode, a variable-speed operation mode, and a variable-direction operation mode.

The target operation mode includes the intermittent operation mode; and the control module 401 is configured to:
control the fan to operate forward at a target rotational speed for a first preset time, control the fan to stop for a second preset time, and repeatedly perform the foregoing sequence at least once; or
control the fan to operate in reverse at a target rotational speed for a first preset time, control the fan to stop for a second preset time, and repeatedly perform the foregoing sequence at least once.

Optionally, the target operation mode includes the intermittent operation mode and the variable-direction operation mode; and the control module 401 is configured to:
control the fan to operate forward at a target rotational speed for a first preset time, control the fan to stop for a second preset time, control the fan to operate in reverse at the target rotational speed for a third preset time, control the fan to stop for a fourth preset time, and repeatedly perform the foregoing sequence at least once; or
control the fan to operate in reverse at a target rotational speed for a first preset time, control the fan to stop for a second preset time, control the fan to operate forward at the target rotational speed for a third preset time, control the fan to stop for a fourth preset time, and repeatedly perform the foregoing sequence at least once.

Optionally, the target operation mode includes the intermittent operation mode and the variable-speed operation mode; and the control module 401 is configured to:
control the fan to operate forward at a first rotational speed for a first preset time, control the fan to stop for a second preset time, control the fan to operate forward at a second rotational speed for a third preset time, control the fan to stop for a fourth preset time, and repeatedly perform the foregoing sequence at least once, where the first rotational speed is different from the second rotational speed;
control the fan to operate in reverse at a first rotational speed for a first preset time, control the fan to stop for a second preset time, control the fan to operate in reverse at a second rotational speed for a third preset time, control the fan to stop for a fourth preset time, and repeatedly perform the foregoing sequence at least once, where the first rotational speed is different from the second rotational speed;
control the fan to operate forward at a first variable rotational speed for a first preset time, control the fan to stop for a second preset time, control the fan to operate forward at a second variable rotational speed for a third preset time, control the fan to stop for a fourth preset time, and repeatedly perform the foregoing sequence at least once; or
control the fan to operate in reverse at a first variable rotational speed for a first preset time, control the fan to stop for a second preset time, control the fan to operate in reverse at a second variable rotational speed for a third preset time, control the fan to stop for a fourth preset time, and repeatedly perform the foregoing sequence at least once.

Optionally, the target operation mode includes the intermittent operation mode, the variable-speed operation mode, and the variable-direction operation mode; and the control module 401 is configured to:
control the fan to operate forward at a first rotational speed for a first preset time, control the fan to stop for a second preset time, control the fan to operate in reverse at a second rotational speed for a third preset time, control the fan to stop for a fourth preset time, and repeatedly perform the foregoing sequence at least once, where the first rotational speed is different from the second rotational speed;
control the fan to operate in reverse at a first rotational speed for a first preset time, control the fan to stop for a second preset time, control the fan to operate forward at a second rotational speed for a third preset time, control the fan to stop for a fourth preset time, and repeatedly perform the foregoing sequence at least once, where the first rotational speed is different from the second rotational speed;
control the fan to operate forward at a first variable rotational speed for a first preset time, control the fan to stop for a second preset time, control the fan to operate in reverse at a second variable rotational speed for a third preset time, control the fan to stop for a fourth preset time, and repeatedly perform the foregoing sequence at least once; or
control the fan to operate in reverse at a first variable rotational speed for a first preset time, control the fan to stop for a second preset time, control the fan to operate forward at a second variable rotational speed for a third preset time, control the fan to stop for a fourth preset time, and repeatedly perform the foregoing sequence at least once.

Optionally, the target operation mode includes the variable-speed operation mode and the variable-direction operation mode; and the control module 401 is configured to:
control the fan to operate forward at a first rotational speed for a first preset time, control the fan to operate in reverse at a second rotational speed for a third preset time, and repeatedly perform the foregoing sequence at least once, where the first rotational speed is different from the second rotational speed;
control the fan to operate in reverse at a first rotational speed for a first preset time, control the fan to operate forward at a second rotational speed for a third preset time, and repeatedly perform the foregoing sequence at least once, where the first rotational speed is different from the second rotational speed;
control the fan to operate forward at a first variable rotational speed for a first preset time, control the fan to operate in reverse at a second variable rotational speed for a third preset time, and repeatedly perform the foregoing sequence at least once; or
control the fan to operate in reverse at a first variable rotational speed for a first preset time, control the fan to operate forward at a second variable rotational speed for a third preset time, and repeatedly perform the foregoing sequence at least once.

Optionally, the target operation mode includes the variable-speed operation mode, and the control module 401 is configured to:
control the fan to operate forward at a first rotational speed for a first preset time, control the fan to operate forward at a second rotational speed for a third preset time, and repeatedly perform the foregoing sequence at least once, where the first rotational speed is different from the second rotational speed;
control the fan to operate in reverse at a first rotational speed for a first preset time, control the fan to operate in reverse at a second rotational speed for a third preset time, and repeatedly perform the foregoing sequence at least once, where the first rotational speed is different from the second rotational speed;
control the fan to operate forward at a first variable rotational speed for a first preset time, control the fan to operate forward at a second variable rotational speed for a third preset time, and repeatedly perform the foregoing sequence at least once; or
control the fan to operate in reverse at a first variable rotational speed for a first preset time, control the fan to operate in reverse at a second variable rotational speed for a third preset time, and repeatedly perform the foregoing sequence at least once.

Optionally, the target operation mode includes the variable-direction operation mode, and the control module 401 is configured to:
control the fan to operate forward at a target rotational speed for a first preset time, control the fan to operate in reverse at the target rotational speed for a second preset time, and repeatedly perform the foregoing sequence at least once; or
control the fan to operate in reverse at a target rotational speed for a first preset time, control the fan to operate forward at the target rotational speed for a second preset time, and repeatedly perform the foregoing sequence at least once.

Optionally, the control module 401 is configured to:
in a self-cleaning process of the fan, in response to a user instruction, control the fan to stop self-cleaning, where the user instruction includes a re-power-on instruction or a self-cleaning termination instruction.

Refer to FIG. 7. Optionally, the identifying module 402 includes:
a second obtaining submodule 4023, configured to obtain vibration information of the fan; and
a control submodule 4024, configured to: when determining, based on the vibration information, that the fan is abnormal, control the fan to operate in the variable state for self-cleaning.

Optionally, the identifying module 402 includes:
the second obtaining submodule 4023, configured to obtain the vibration information of the fan; and
the control submodule 4024, configured to: when determining, based on the vibration information, that the fan is abnormal, send fan self-cleaning prompt information.

Optionally, the control module 401 is configured to:
when determining that the vehicle meets the decontamination condition, in response to a user cleaning instruction, control the fan to operate in the variable state for self-cleaning, where the user cleaning instruction is generated based on the fan self-cleaning prompt information.

Optionally, the control submodule 4024 is configured to:
when determining, based on the vibration information, that a vibration frequency of the fan exceeds a preset fan vibration threshold, determine that the fan is abnormal.

Optionally, the control module 401 is further configured to:
in the self-cleaning process of the fan, when determining, based on the vibration information, that a vibration frequency of the fan is greater than a preset abnormal frequency threshold, control the fan to stop self-cleaning.

In conclusion, the fan control apparatus provided in this embodiment of the present invention may control the fan to operate in the variable state for self-cleaning. This avoids affecting normal operation of the fan or even causing failure of the fan due to contamination.

An embodiment of the present invention provides a vehicle. The vehicle includes the vehicle controller shown in FIG. 3 or the fan control apparatus shown in any one of FIG. 4 to FIG. 7.

It should be noted that logic and/or steps represented in the flowcharts or described in other ways herein, for example, can be considered as a sequenced list of executable instructions for implementing a logical function, and can be specifically implemented in any computer-readable medium to be used by instruction execution systems, apparatuses or devices (such as a computer-based system, a system including a processor or other systems that can fetch instructions from the instruction execution systems, apparatuses or devices and execute the instructions), or used in combination with these instruction execution systems, apparatuses or devices. For this specification, the "computer-readable medium" may be any apparatus that may include, store, exchange information with, propagate, or transmit a program to be used by the instruction execution systems, apparatuses or devices or used in combination with these instruction execution systems, apparatuses or devices. More specific examples (a non-exhaustive list) of the computer-readable medium include the followings: an electrical connection portion (an electronic apparatus) having one or more wires, a portable computer cassette (a magnetic apparatus), a random access memory (RAM), a read-only memory (ROM), an erasable and programmable read-only memory (an EPROM or a flash memory), an optical fiber apparatus, and a portable compact disk read-only memory (CDROM). In addition, the computer-readable medium may even be paper or other suitable media on which the program can be printed because the program may be electronically obtained, for example, by optically scanning the paper or the other media and then editing, interpreting or processing, when necessary, in other suitable ways, and is then stored in a computer memory.

It should be understood that various parts of the present invention may be implemented in hardware, software, firmware or a combination thereof. In the foregoing implementations, a plurality of steps or the method may be implemented by software or firmware stored in a memory and executed by a suitable instruction execution system. For example, if implemented in hardware, as in another implementation, the various parts can be implemented by any one of the following technologies known in the art or a combination thereof: a discrete logic circuit having a logic gate circuit for implementing a logic function on a data signal, an application-specific integrated circuit having a suitable combinational logic gate circuit, a programmable gate array (PGA), a field programmable gate array (FPGA), and the like.

In the description of this specification, descriptions referring to the terms "optionally", "some embodiments", "an example", "a specific example", or "some examples" mean that specific features, structures, materials, or characteristics described in connection with the embodiment or example are included in at least one embodiment or example of the present invention. In this specification, schematic expressions of the foregoing terms do not necessarily refer to a same embodiment or an example. Moreover, the specific characteristics, structures, materials, or features described may be combined in a proper manner in any one or more embodiments or examples.

In addition, the terms "first" and "second" in embodiments of the present invention are merely used for the purpose of description and are not intended to indicate or imply relative importance, or implicitly indicate the number of the indicated technical features in embodiments. Therefore, a feature limited by terms such as "first" or "second" in embodiments of the present invention may explicitly or implicitly include that the embodiment includes at least one such feature. In the description of the present invention, "a plurality of" means at least two or more, for example, two, three, or four, unless otherwise clearly limited in embodiments.

Although embodiments of the present invention have been shown and described above, it may be understood that the foregoing embodiments are examples and should not be understood as a limitation on the present invention. A person of ordinary skill in the art may make changes, modifications, substitutions, and variations to the foregoing embodiments within the scope of the present invention.

## Claims

1. A fan control method, wherein the method comprises:
controlling a fan to operate in a variable state for self-cleaning.

2. The method according to claim 1, wherein the controlling the fan to operate in the variable state comprises:
when identifying that the fan is contaminated, controlling the fan to operate in the variable state.

3. The method according to claim 1, wherein the method is applied to a vehicle; and the controlling the fan to operate in the variable state comprises:
if the vehicle is determined to meet a decontamination condition, controlling the fan to operate in the variable state.

4. The method according to claim 2, wherein the method is applied to a vehicle, and the method further comprises:
obtaining at least one of environmental information and mode state information of the vehicle; and
identifying whether the fan is contaminated according to the at least one of the environmental information and the mode state information.

5. The method according to claim 4, wherein the environmental information comprises at least one of location information of the vehicle and weather information.

6. The method according to claim 5, wherein the identifying whether the fan is contaminated according to the environmental information comprises:
when determining that the vehicle is in a target area according to the location information, determining that the fan is contaminated, wherein the target area represents an environment in which the fan is prone to contamination.

7. The method according to claim 6, wherein the target area comprises a desert zone or a muddy road zone.

8. The method according to claim 5, wherein the identifying whether the fan is contaminated according to the environmental information comprises:
when determining that weather in an environment in which the vehicle is currently located is target weather according to the weather information, determining that the fan is contaminated, wherein the target weather is weather in which the fan is prone to contamination.

9. The method according to claim 8, wherein the target weather comprises sand and dust weather.

10. The method according to claim 4, wherein the identifying whether the fan is contaminated according to the mode state information comprises:
when determining, based on the mode state information, that the vehicle operates in a target mode, determining that the fan is contaminated, wherein the target mode is an operation mode in which the fan is prone to contamination.

11. The method according to claim 10, wherein the target mode comprises a sand mode or a mud mode.

12. The method according to any one of claims 3 to 11, wherein the determining that the vehicle meets a decontamination condition comprises:
when the vehicle is in a target state, determining that the vehicle meets the decontamination condition, wherein the target state comprises an OFF-gear state, a vehicle low-voltage power state, or a vehicle power-off state.

13. The method according to any one of claims 3 to 12, wherein the determining that the vehicle meets a decontamination condition comprises:
when the vehicle is in the target state and the vehicle is in a preset safety zone, determining that the vehicle meets the decontamination condition, wherein the target state comprises the OFF-gear state, the vehicle low-voltage power state, or the vehicle power-off state.

14. The method according to any one of claims 3 to 13, wherein the determining that the vehicle meets a decontamination condition comprises:
when the vehicle is in the target state, the vehicle is in the preset safety zone, and the vehicle is in a level state, determining that the vehicle meets the decontamination condition, wherein the target state comprises the OFF-gear state, the vehicle low-voltage power state, and the vehicle power-off state.

15. The method according to any one of claims 1 to 14, wherein the controlling the fan to operate in the variable state comprises:
controlling the fan to operate in a target operation mode, wherein
the target operation mode comprises at least one of an intermittent operation mode, a variable-speed operation mode, and a variable-direction operation mode.

16. The method according to claim 15, wherein the target operation mode comprises the intermittent operation mode; and the controlling the fan to operate in a target operation mode comprises:
controlling the fan to operate forward at a target rotational speed for a first preset time, controlling the fan to stop for a second preset time, and repeatedly performing the foregoing sequence at least once; or
controlling the fan to operate in reverse at a target rotational speed for a first preset time, controlling the fan to stop for a second preset time, and repeatedly performing the foregoing sequence at least once.

17. The method according to claim 15, wherein the target operation mode comprises the intermittent operation mode and the variable-direction operation mode; and the controlling the fan to operate in a target operation mode comprises:
controlling the fan to operate forward at a target rotational speed for a first preset time, controlling the fan to stop for a second preset time, controlling the fan to operate in reverse at the target rotational speed for a third preset time, controlling the fan to stop for a fourth preset time, and repeatedly performing the foregoing sequence at least once; or
controlling the fan to operate in reverse at a target rotational speed for a first preset time, controlling the fan to stop for a second preset time, controlling the fan to operate forward at the target rotational speed for a third preset time, controlling the fan to stop for a fourth preset time, and repeatedly performing the foregoing sequence at least once.

18. The method according to claim 15, wherein the target operation mode comprises the intermittent operation mode and the variable-speed operation mode; and the controlling the fan to operate in a target operation mode comprises:
controlling the fan to operate forward at a first rotational speed for a first preset time, controlling the fan to stop for a second preset time, controlling the fan to operate forward at a second rotational speed for a third preset time, controlling the fan to stop for a fourth preset time, and repeatedly performing the foregoing sequence at least once, wherein the first rotational speed is different from the second rotational speed;
controlling the fan to operate in reverse at a first rotational speed for a first preset time, controlling the fan to stop for a second preset time, controlling the fan to operate in reverse at a second rotational speed for a third preset time, controlling the fan to stop for a fourth preset time, and repeatedly performing the foregoing sequence at least once, wherein the first rotational speed is different from the second rotational speed;
controlling the fan to operate forward at a first variable rotational speed for a first preset time, controlling the fan to stop for a second preset time, controlling the fan to operate forward at a second variable rotational speed for a third preset time, controlling the fan to stop for a fourth preset time, and repeatedly performing the foregoing sequence at least once; or
controlling the fan to operate in reverse at a first variable rotational speed for a first preset time, controlling the fan to stop for a second preset time, controlling the fan to operate in reverse at a second variable rotational speed for a third preset time, controlling the fan to stop for a fourth preset time, and repeatedly performing the foregoing sequence at least once.

19. The method according to claim 15, wherein the target operation mode comprises the intermittent operation mode, the variable-speed operation mode, and the variable-direction operation mode, and the controlling the fan to operate in a target operation mode comprises:
controlling the fan to operate forward at a first rotational speed for a first preset time, controlling the fan to stop for a second preset time, controlling the fan to operate in reverse at a second rotational speed for a third preset time, controlling the fan to stop for a fourth preset time, and repeatedly performing the foregoing sequence at least once, wherein the first rotational speed is different from the second rotational speed;
controlling the fan to operate in reverse at a first rotational speed for a first preset time, controlling the fan to stop for a second preset time, controlling the fan to operate forward at a second rotational speed for a third preset time, controlling the fan to stop for a fourth preset time, and repeatedly performing the foregoing sequence at least once, wherein the first rotational speed is different from the second rotational speed;
controlling the fan to operate forward at a first variable rotational speed for a first preset time, controlling the fan to stop for a second preset time, controlling the fan to operate in reverse at a second variable rotational speed for a third preset time, controlling the fan to stop for a fourth preset time, and repeatedly performing the foregoing sequence at least once; or
controlling the fan to operate in reverse at a first variable rotational speed for a first preset time, controlling the fan to stop for a second preset time, controlling the fan to operate forward at a second variable rotational speed for a third preset time, controlling the fan to stop for a fourth preset time, and repeatedly performing the foregoing sequence at least once.

20. The method according to claim 15, wherein the target operation mode comprises the variable-speed operation mode and the variable-direction operation mode, and the controlling the fan to operate in a target operation mode comprises:
controlling the fan to operate forward at a first rotational speed for a first preset time, controlling the fan to operate in reverse at a second rotational speed for a third preset time, and repeatedly performing the foregoing sequence at least once, wherein the first rotational speed is different from the second rotational speed;
controlling the fan to operate in reverse at a first rotational speed for a first preset time, controlling the fan to operate forward at a second rotational speed for a third preset time, and repeatedly performing the foregoing sequence at least once, wherein the first rotational speed is different from the second rotational speed;
controlling the fan to operate forward at a first variable rotational speed for a first preset time, controlling the fan to operate in reverse at a second variable rotational speed for a third preset time, and repeatedly performing the foregoing sequence at least once; or
controlling the fan to operate in reverse at a first variable rotational speed for a first preset time, controlling the fan to operate forward at a second variable rotational speed for a third preset time, and repeatedly performing the foregoing sequence at least once.

21. The method according to claim 15, wherein the target operation mode comprises the variable-speed operation mode, and the controlling the fan to operate in a target operation mode comprises:
controlling the fan to operate forward at a first rotational speed for a first preset time, controlling the fan to operate forward at a second rotational speed for a third preset time, and repeatedly performing the foregoing sequence at least once, wherein the first rotational speed is different from the second rotational speed;
controlling the fan to operate in reverse at a first rotational speed for a first preset time, controlling the fan to operate in reverse at a second rotational speed for a third preset time, and repeatedly performing the foregoing sequence at least once, wherein the first rotational speed is different from the second rotational speed;
controlling the fan to operate forward at a first variable rotational speed for a first preset time, controlling the fan to operate forward at a second variable rotational speed for a third preset time, and repeatedly performing the foregoing sequence at least once; or
controlling the fan to operate in reverse at a first variable rotational speed for a first preset time, controlling the fan to operate in reverse at a second variable rotational speed for a third preset time, and repeatedly performing the foregoing sequence at least once.

22. The method according to claim 15, wherein the target operation mode comprises the variable-direction operation mode, and the controlling the fan to operate in a target operation mode comprises:
controlling the fan to operate forward at a target rotational speed for a first preset time, controlling the fan to operate in reverse at the target rotational speed for a second preset time, and repeatedly performing the foregoing sequence at least once; or
controlling the fan to operate in reverse at a target rotational speed for a first preset time, controlling the fan to operate forward at the target rotational speed for a second preset time, and repeatedly performing the foregoing sequence at least once.

23. The method according to any one of claims 1 to 15, wherein in a self-cleaning process of the fan, the method further comprises:
in response to a user instruction, controlling the fan to stop self-cleaning, wherein the user instruction comprises a re-power-on instruction or a self-cleaning termination instruction.

24. The method according to claim 1, wherein the method further comprises:
obtaining vibration information of the fan; and
when determining, based on the vibration information, that the fan is abnormal, controlling the fan to operate in the variable state for self-cleaning.

25. The method according to claim 1, wherein the method is applied to a vehicle, and the method further comprises:
obtaining vibration information of the fan; and
when determining, based on the vibration information, that the fan is abnormal, sending fan self-cleaning prompt information.

26. The method according to claim 25, wherein the method further comprises:
in response to a user cleaning instruction, controlling the fan to operate in the variable state for self-cleaning, wherein the user cleaning instruction is generated based on the fan self-cleaning prompt information.

27. The method according to claim 24 or 25, wherein the determining, based on the vibration information, that the fan is abnormal comprises:
when determining, based on the vibration information, that a vibration frequency of the fan exceeds a preset fan vibration threshold, determining that the fan is abnormal.

28. The method according to claim 24 or 25, wherein in a self-cleaning process of the fan, the method further comprises:
when determining, based on the vibration information, that a vibration frequency of the fan is greater than a preset abnormal frequency threshold, controlling the fan to stop self-cleaning.

29. A computer-readable storage medium, storing a control program for a fan, and when the control program being executed by a processor, the fan control method according to any one of claims 1 to 28 being implemented.

30. A vehicle controller, comprising a memory, a processor, and a control program for a fan that being stored in the memory and that being run on the processor, and when the control program being executed by a processor, the fan control method according to any one of claims 1 to 28 being implemented.

31. A fan control apparatus, comprising:
a control module, configured to control a fan to operate in a variable state for self-cleaning.

32. A vehicle, comprising the vehicle controller according to claim 30 or the fan control apparatus according to claim 31.
